# EUROPEAN PATENT APPLICATION

(11) **EP 2 797 010 A2**
(43) Date of publication of application: **29.10.2014**
(21) Application number: 13198481.7
(22) Date of filing: 19.12.2013
(51) Int. Cl.: G06F 17/30

(54) **System and method for distributed interaction media storage and retrieval**

(30) Priority: 22.04.2013 US 201313867394
(71) Applicant: Cti Group (holding), Inc., Indianapolis, IN 46204 (US)
(72) Inventor: Rao, Siddhartha, Indianapolis, IN 46228 (US); Thompson, Jeffrey, Indianapolis, IN 46268 (US); Majumdar, Sukanta, Carmel, IN 46074 (US); Walls, Scott, Indianapolis, IN 46217 (US); Perrin, Leister, Brownsburg, IN 46112 (US)
(74) Representative: Gillard, Matthew Paul

(57) **Abstract**

A method for distributed storage and retrieval of interactions comprises registering a plurality of temporary storage endpoints and a plurality ofpermanent storage endpoints with a storage manager; capturing one of the interactions in one of the temporary storage endpoints; determining one of the plurality of permanent storage endpoints to which the captured interaction should be transferred; transferring the interaction to the determined one of the plurality of permanent storage endpoints; and maintaining a location of the transferred interaction and making the transferred interaction available for retrieval and analysis.

## Description

### Field of the Invention

The present invention is of a method and system for capturing, distributing, and retrieving intercepted audio, video, and messaging interactions captured across a computer network. The purpose of the present invention to enable the heterogeneous, distributed storage of interaction elements in a mechanism that enables regulatory and policy compliance for hosting service providers serving regulated organizations.

### Description of Related Art

The requirement to store recorded interactions is crucial to many environments, specifically regulatory frameworks, quality management of customer interactions, as well as part of normal business processes. The obligation to record, store, and readily access those interactions, especially in a regulatory environment, is critical, as business processes cannot occur if business or financial interactions are not recorded.

For example, the Dodd-Frank Wall Street Reform and Consumer Protection Act (H.R. 4173) explicitly requires financially sensitive transactions to be recorded and retained for an extended length of time, such as five years, for audit and reconciliation purposes.

The regulations facing those organizations also pose challenges in terms of the storage location and retention length of the records in question. In the Dodd-Frank legislation, the location is specified as the principal location of business for the swap dealer. In particular geographies, for example Germany, recorded interactions are considered sensitive and cannot cross national borders without explicit consent or permission.

Those policies are technically complicated by the emergence of hosting service providers who are recording those interactions directly in carrier mobile and fixed telephony networks, where the recording can be captured in a variety of locations but due to policy cannot be retained within the source location and must be delivered to a location that appropriately houses the interaction recording with respect to local laws and regulations.

The options for the long-term and short-term interaction recording solutions are incongruent. There is a dichotomy in the performance and cost requirements for those storage solutions. In the short term, as the interaction is being captured and recorded, storage is required to be expeditious for serialization and retrieval but controlled in size. By contrast, the long-term archiving of those hosted interactions has limited performance requirements (e.g. near on-line storage) but should be virtually limitless in expansion. As a result, the technology basis for those different storage mediums can be dramatically different. For example, short-term interaction recording solutions may leverage direct attached standard operating system file system architectures (e.g. EXT3, NTFS, etc.), long-term interaction-recording solutions may leverage binary large object (BLOB) database storage solutions with very large database, indexing, and search capabilities (VLDB) (e.g. EMC Atmos and Amazon S3).

While it has been identified that the interaction recording storage location may be distributed and heterogeneous in nature, the same applies for the sources of the interaction recordings. The source media for those hosted interaction recordings may originate from a wide variety of network locations, especially when an international mobile operator network is considered.

Given that those storage locations are highly distributed in nature, it is still highly advantageous to present and retrieve those interactions in an aggregated and centrally available, serviced fashion. The subscriber should not experience any disadvantage, in terms of either management or presentation, despite the fact that the interactions may be distributed in a variety of locations and potentially across multiple wide area networks.

Further, rather than replicating those stored interactions to the central presentation location, analytical operations on those multimedia interactions which require efficient, direct access to the stored multimedia are best performed nearest to the location of the stored interaction, with only the results of the analysis performed being returned to the central servicing provider. The distributed processing paradigm yields significant network bandwidth and processing efficiencies since excess replication is not required.

### Summary of the Invention

There is therefore a need for, and it would be highly advantageous to have, an architecture which provides a mechanism for the distributed storage of audio, video, and messaging interactions in progress, and the distribution of those interactions upon completion to many different permanent interaction recording long-term storage solutions. There is further a need to expeditiously retrieve and present those interaction recordings in a storage agnostic presentation platform regardless of the location of the storage of the interaction recording, with the analysis of the interaction recordings possibly occurring at or near the distributed storage location.

It is therefore an object of the invention to provide a mechanism of decoupling the storage for an interaction being recorded from the long-term storage requirements for the recorded interactions.

It is another object of the invention to provide a storage-agnostic reporting service to expeditiously retrieve and present those interaction recordings regardless of the location of the storage of an interaction recording.

It is still another object of the invention to provide analysis of the interaction recording at the distributed long-term location for a stored interaction.

To achieve the above and other objects, the present invention is directed to a method for distributed storage and retrieval of interactions, the method comprising: registering a plurality of temporary storage endpoints and a plurality of permanent storage endpoints with a storage manager; capturing one of the interactions in one of the temporary storage endpoints; determining one of the plurality of permanent storage endpoints to which the captured interaction should be transferred; transferring the interaction to the determined one of the plurality of permanent storage endpoints; and maintaining a location of the transferred interaction and making the transferred interaction available for retrieval and analysis. The invention is further directed to a system for implementing such a method.

Interactions routinely need to be recorded, often for regulatory compliance, quality management, and fraud reduction efforts. Those recorded interactions often serve as legal documentation in litigation, regulatory, or law enforcement use cases. Those recordings can be leveraged by subscribers (e.g. a participant in the interaction, etc.) to provide testimony for those use cases.

Interactions can be recorded utilizing a number of different technology strategies, which can be summarily categorized into two approaches. The interaction can either be recorded by the subscriber (or the subscriber's organization) or it may also be recorded by the subscriber's service provider (e.g. a mobile network operator, hosted telephony service provider, enterprise service, a government law enforcement agency, etc.), on behalf of the subscriber. The choice of whether the interaction is recorded by a subscriber or a service provider is driven by economic as well as technical factors.

For example, it is more cost effective and functionally achievable for a mobile network operator (MNO) to record mobile telephony conversations due to the fact that those interactions are often inaccessible to record by the subscriber. In contrast, subscribers are often able to record communications occurring on devices that traverse networks that they own and operate.

The party that records the interaction is irrelevant to where the recorded interaction resides for long-term storage and archival reasons. Indeed, regulatory concerns may dictate a different location for the recorded interaction from the location where it is accessed for long-term archival. For example, while it may be more accessible and efficient to record mobile telephony conversations within a MNO, those telephony conversations may have to reside in the principal business location of a subscriber.

It is further unreasonable to assume a homogenous storage architecture or technology between the source of a recorded interaction and the long-term archival resting place for a recorded interaction. Finally, analytic operations on long-term archived stored interactions are optimally performed nearest in network location to the long-term archival resting place.

It is first defined and stipulated that a communication service provider provides communication interaction transmission and reception services to subscribers via a pre-existing service delivery platform. Those subscribers have a requirement to record those interactions in a service platform that has accessible and efficient access to the interactions that need to be recorded. That is typically accomplished by leveraging a Recording System, which is responsible for selectively intercepting interactions (e.g. audio, video, messaging, etc.) within a communication network. For an example of such a Recording System, please see U.S. Patent 7,548,609: "Process for Scalable Conversation Recording," whose disclosure is hereby incorporated by reference in its entirety into the present disclosure.

Those subscribers further have a requirement to initially record those interactions in a temporary storage location ("Temporary Storage") in an efficient fashion, but on an event driven basis transfer those recorded interactions automatically to a permanent archive storage location ("Permanent Storage") which may or may not be different from the temporary storage location. The events, which drive the transference from Temporary Storage to Permanent Storage, may be related to the completion or closure of the interaction itself (e.g. the telephony call ends) or may be time-driven (e.g. transfer the recorded interaction after a selected duration of time).

It is one aspect of the present invention to define and create a Temporary Storage Endpoint, which facilitates the temporary storage of an interaction at the point of capture. The Temporary Storage Endpoint exposes the stored interaction using a standards based, normalized application-programming interface (API). That API abstracts the underlying storage technology being leveraged to store the temporary interaction to a physical, machine readable and writeable storage medium.

It is another aspect of the present invention to define and create a Permanent Storage Endpoint, which facilitates the Permanent Storage of an interaction for long-term archival and storage purposes. That Permanent Storage Endpoint exposes access to various permanent storage devices by defining a plurality of Storage Paths. Storage Paths represent an abstract representation of a physical, machine readable and writeable storage medium. In the preferred embodiment of the current invention, those Storage Paths and the actual Permanent Storage Endpoint expose stored interactions using a standards-based, normalized API, enabling a level of abstraction of the underlying storage architecture.

It is yet another aspect of the present invention to define and create a Storage Manager, which enables the coordination and transfer of interactions between a plurality of Temporary Storage Endpoints and a plurality of Permanent Storage Endpoints. The Storage Manager also acts a trustworthy registration authority of both Temporary Storage Endpoints and Permanent Storage Endpoints, ensuring a trusted relationship between Temporary Storage Endpoints and Permanent Storage Endpoints.

The Storage Manager also has a defined Storage Policy that declaratively identifies, based upon a variety of criteria, including, but not limited to, metadata about the stored interaction or participants in the interaction, a policy for the location of a recorded interaction.

It is yet another aspect of the present invention to define a multi-tenant Presentation Portal which enables multi-subscriber, multi-organization, policy driven, centralized, expeditious access to recorded interactions regardless of their storage location.

It is yet another aspect of the present invention that encrypting and securing the recorded interactions is performed by Temporary Storage Endpoints and Permanent Storage Endpoints, ensuring that the Storage Manager does not have to physically inspect the recorded interaction for security and regulatory purposes.

It is yet another aspect of the present invention that analytic services can be exposed by either Temporary Storage Endpoints or Permanent Storage Endpoints for the purposes of analyzing the contents of the stored interactions as a distributed service, enabling expeditious retrieval.

The preferred embodiment of the invention involves the following components: an interaction Recording System, a Storage Manager, a plurality of Temporary Storage Endpoints, a plurality of Permanent Storage Endpoints, and a Presentation Portal. The Recording System is responsible for the interception of interactions, based upon policy, and general surveillance of a plurality of communicating parties participating in an interaction.

There are five major processes involved where those components interact. The first process is Registration, where the Temporary Storage Endpoints and Permanent Storage Endpoints register with the Storage Manager and persist configuration and authentication details. The second process is Capture, where Temporary Storage Endpoints are leveraged to capture and encode particular interactions. The third process is Transference, where interactions are transferred, based upon a configurable policy, between Temporary Storage Endpoints and Permanent Storage Endpoints. The fourth process is Retrieval and Analytics, where interactions are presented for expeditious retrieval and analytics (e.g. speech analytics, textual analytics, video or picture analytics, summarized reporting, etc.) where that can be performed on the stored interactions at Permanent Storage Endpoints or Temporary Storage Endpoints, with the results of such analysis summarized and presented in a centrally accessible Presentation Portal. The fifth process is Maintenance, where interactions may be deleted or further offloaded for long-term archival and record retention requirements.

During the process of Registration for Temporary Storage Endpoints, a dynamic policy is constructed to define a mapping between a Temporary Storage Endpoint and the actual storage medium appropriate for the capture of a recording. That Temporary Storage Endpoint is assigned a resource locator. The Recording System now can initiate and communicate with the Storage Manager and can identify a Temporary Storage Endpoint when defining, creating, closing, or destroying a recorded interaction or performing any other related transaction. That locator is used by the Storage Manager to identify and manage the stored interaction during subsequent processes defined in the invention. Modification of that dynamic policy can result in the deletion of a map between a Temporary Storage Endpoint and the actual storage medium.

Registration for Permanent Storage Endpoints is the process in which a Permanent Storage Endpoint registers configuration and authenticates access with a Storage Manager. That registration process identifies a Permanent Storage Endpoint as ready and available to receive interactions during the Transference process. In the preferred embodiment of the current invention, as part of that Registration process the Permanent Storage Endpoint may optionally present a certificate of authenticity that may be optionally verified by the Storage Manager to ensure that only authorized Permanent Storage Endpoints can register for utilization.

In the preferred embodiment of the current invention, Permanent Storage Endpoints may optionally deregister their availability from the Storage Manager. Before that deregistration activity is committed, the Storage Manager first validates whether any interactions are stored within the Permanent Storage Endpoint in question. If interactions are identified as being stored and accessible on the Permanent Storage Endpoint in question, the Storage Manager discontinues the process. Either the operator of the system, the user of that process and activity, or other actor must transfer the recorded interactions from the Permanent Storage Endpoint to another Permanent Storage Endpoint before deregistration can occur.

The goal of the Registration (and correlative deregistration) process is to identify all the Temporary Storage Endpoints and Permanent Storage Endpoints that will participate in subsequent processes. That identification process also yields the security benefit of authenticating and monitoring the reliability of the components. In the preferred embodiment of the current invention, the Storage Manager performs that authentication and monitoring action.

Temporary Storage Endpoints and Permanent Storage Endpoints are pluralities in that system. There is no limit on the number of those endpoints that can be involved in that distributed storage strategy. There is also no guarantee that Temporary Storage Endpoints or Permanent Storage Endpoints may exist on the same LAN, WAN, or Internet domain. Indeed, the only guarantee is that all endpoints and the Storage Manager have accessibility to other endpoints through a communication network where required to achieve steps in the processes defined. There is also no guarantee about the reliability or consistency of a communication link between the components in question, which is important when considering the Transference process.

Elaborating on the Capture process, the Recording System deposits a captured interaction in storage medium exposed by a Temporary Storage Endpoint. In the preferred embodiment of the invention, the Temporary Storage Endpoint and the Recording System share a database that identifies which interactions are being captured. In the preferred embodiment of the invention, that database platform is the actual file system of the storage medium itself (e.g. NTFS, EXT3) although it is conceivable that other database platforms can be leveraged.

During the process of interaction Capture, the Recording System continuously provides update events on the Capture process to the Storage Manager, including, but not limited to, the creation, closure, and destruction of an interaction. Those events minimally contain the resource locator of the captured interaction within a Temporary Storage Endpoint. Within the preferred embodiment of the current invention, those events also contain metadata about the interaction, such as the duration of the interaction or the participating parties. Those update events are optionally leveraged by the Storage Manager to initiate the Transference process, although a time-based event can be used as well (e.g. trigger Transference after some configurable period of time has passed since closure of an interaction).

Transference is the process of moving captured interactions from a Temporary Storage Endpoint to a Permanent Storage Endpoint. A policy driven event, as defined during the Capture process, triggers the need to invoke the Transference process within the Storage Manager. The Storage Manager inspects the policy driven event and based upon policy definable criteria, identifies a Permanent Storage Endpoint and subordinate Storage Path suitable for the captured interaction.

The Storage Manager then instructs the Temporary Storage Endpoint to transfer the captured interaction to the identified Permanent Storage Endpoint. That process operates asynchronously, and as the process of Transference occurs, the Storage Manager is continuously updated as to the success or failure of the Transference transaction.

In the preferred embodiment of the current invention, if the Transference operation fails, the interaction may be stored in a further defined failure location, a Quarantine storage path. A Permanent Storage Endpoint receives the interaction, compares a computable hash of the captured interaction to a similarly computed hash (e.g. Secure Hash Algorithm-2 (SHA2), Message Digest Algorithm 5 (MD5), etc.) available at the Permanent Storage Endpoint to ensure successful transfer, and then deposits the interaction into a defined Storage Path. The Permanent Storage Endpoint then notifies the Storage Manager that successful Transference has occurred.

In the Retrieval and Analytics process, subscribers access a storage agnostic computing platform to retrieve captured interactions. In the preferred embodiment of the current invention, subscribers are not presented with any knowledge of where the captured interaction resides and have no requirement to have knowledge of where an interaction resides.

Throughout the present disclosure, the term "Internet" is used to generally designate the global, linked web of millions of networks, which is used to connect computers all over the world. That includes, but is not limited to all intranet, private Internet and virtual private Internet networks. The term "Storage Device" or "Storage Endpoint" is used to generally designate a machine readable storage device, which includes, but is not limited to, network attached storage (NAS) devices, storage area network (SAN) devices, Internet Small Computer System Interface (iSCSI) devices, Network File System (NFS) mounts, Distributed File System (DFS) mounts, direct attached storage (DAS) devices, magnetic tape storage solutions, a Random Access Memory (RAM) storage solution, or digital optical tape. The term "Endpoint" generally designates a network service that is connected to the Internet.

The term "Interaction" refers to a captured, recorded record of a transaction or interaction that while typically is between two human beings may also represent an interaction between a human being and a machine (e.g. voicemail) or a machine with another machine (e.g. a trunked carrier backbone where two session border controllers are interconnected).

The term "Application Programming Interface" refers to a machine accessible service, which can be invoked across the Internet, which enables a machine to interact with another machine in an automated fashion. Example implementations of Application Programming Interface includes, but are not limited to, Simple Object Access Protocol (SOAP), Representational State Transfer (REST), Remote Method Invocation (RMI), Common Object Request Broker Architecture (CORBA), Distributed Common Object Model (DCOM), Microsoft .NET Remoting, and Javascript Object Notation (JSON) over Websocket. That enablement may occur in the form of a remote procedure call (RPC) or may also be a local procedure call (LPC).

The terms "database" and "database platform" include, but are not limited to, relational database platforms such as Microsoft SQL Server, Oracle Database, character delimited flat files, object database such as MongoDB, indexed sequential access method (ISAM) databases, BerkeleyDB, Btrieve, and other similar database technologies. The terms can also refer to the inherent metadata model of a file system such as Microsoft New Technology File System (NTFS), the Linux Extended File System (EXT, EXT2, EXT3, EXT4), the Hierarchical File System (HFS), or journal file systems (e.g. HFS+).

The term "hash" refers to a hashing function, which is an algorithm, or subroutine, that maps large data sets of variable length to smaller data sets of a fixed length, with a preference to referential transparency. The specific hash algorithm refers to subroutines including, but not limited to, MD5 or SHA2.

The term "portal" refers to an Internet accessible service that is consumed in a client-server or peer-to-peer methodology. Examples of portal technologies include a Microsoft IIS hosted website, a Java J2EE hosted website, or a rich client solution which consumes remote procedure call APIs over a network (e.g. SOAP).

The term "subscriber" refers to a user who wishes to access that storage system for the purpose of retrieving, manipulating, annotating, analyzing, summarizing and commenting upon a recorded interaction. A subscriber may be a human being or a machine. For example, a machine that periodically downloads or copies recorded interactions for the purpose of archival from that storage system would be considered a subscriber. The term "tenant" refers to a collection of subscribers.

The mechanism of capturing interactions is well known in the art and is therefore not discussed in detail in the present disclosure. It is stipulated that a Recording System is defined which actually captures the interaction. That Recording System can implement a number of approaches for recording an interaction.

It must be further noted that any messaging, especially related to remote procedure invocation over an API, may or may not involve intermediaries, proxies, other routers, or other network elements which do not affect the net result of the orchestrated service.

Interaction recording is a critical business process required by several regulatory processes as well as being critical in business process improvement. Communication interactions often traverse multiple heterogeneous networks and need to be captured in those networks, yet stored for long-term utility in a variety of locations that are variably defined by business policy. The purpose of the present invention is to define a network neutral, flexible, storage architecture that abstracts the storage architecture from the presentation and retrieval of recorded interactions and enables central policy control of the storage of recorded interactions.

### Brief Description of the Drawings

The invention is herein described, by way of example only, with reference to the accompanying drawings, wherein:
FIG. 1 is a schematic block diagram of exemplary storage strategy where a Storage Manager is coordinating activities across Temporary Storage Endpoints and Permanent Storage Endpoints thereby managing the location of recorded interactions; and
FIG. 2 is an exemplary flow chart explaining the validation process for registering a Permanent Storage Endpoint with a Storage Manager and the process steps required.

### Detailed Description of the Preferred Embodiment

The following description is intended to provide a description of certain background methods and technologies, which are optionally used in the method and system of the present invention. The present invention is specifically not drawn to those methods and technologies alone. Rather, they are used as tools to accomplish the goal of the present invention.

In the preferred embodiment of the current invention, it is stipulated that Permanent Storage Endpoints and Temporary Storage Endpoints are represented as Hypertext Transfer Protocol (HTTP) over Transport Layer Security (TLS) (HTTP/S) Uniform Resource Locators (URLs). Those URLs provide a standard based, firewall neutral, secure, representational state transfer (REST) application-programming interface (API) which abstracts the underlying storage method. It is further stipulated that the Storage Manager is also communicated with over a HTTP/S transport to provide transport security.

It is not guaranteed that those endpoints will exist within the same network, security trust domain, or have homogenous connectivity between components. In the preferred embodiment of the current invention, a packet switched Internet protocol (IP) network is used to interconnect components. In the preferred embodiment of the current invention, traffic shaping, quality of service improving network elements are leveraged to provide a high level of service connectivity between endpoints, although that is not required or guaranteed.

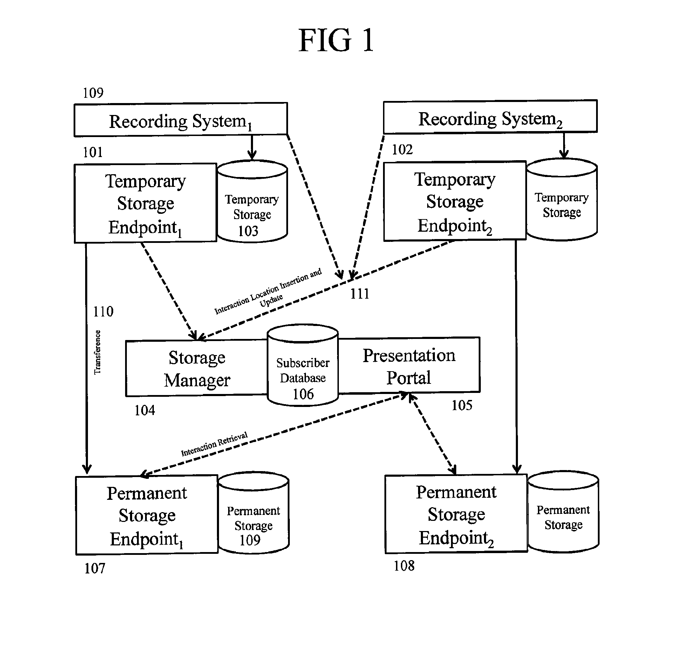

A Storage Manager orchestrates those endpoints. The Storage Manager adds policy-based capabilities to the overall system, enabling a business process rule set for determining the location of recorded interactions. Referring now to the drawings, FIG. 1 is a block diagram of an interaction recording storage and retrieval strategy that enables policy driven interaction recording storage and retrieval. There are multiple components with different responsibilities.

The first is the Temporary Storage Endpoint **101** which, through an exposed API, enables other components to: (1) enumerate recorded interactions stored in Temporary Storage 103, (2) calculate the hash of a recorded interaction, (3) access recorded interactions that may be in progress for the purpose of live monitoring of the interaction, (4) get available metadata about an interaction, and (5) finally attempt (in the preferred embodiment, in a queued fashion) to push recorded interactions to another endpoint. In addition, other methods or actions may be exposed for the purposes of monitoring and instrumentation.

Each of those actions is represented by a REST HTTP POST or GET operation, per Internet Engineering Task Force (IETF) Request for Comment 2616 (HTTP 1.1).

In the preferred embodiment of the invention, recorded interactions are identified by a unique ID (e.g. a globally unique identifier (GUID) or an incrementing integer value). In the preferred embodiment of the invention, requests with all endpoints, the Storage Manager, and other components, including Temporary Storage Endpoints, may include a reference to the recorded interaction. That reference is an encrypted version of the unique ID associated with a recorded interaction. The encryption method can vary, but in the preferred embodiment of the invention, the Advanced Encryption Standard (AES) with 256 bit keys (AES-256, Rijndael) is used.

A plurality of Temporary Storage Endpoints can be provisioned for use, which is illustrated by the second Temporary Storage Endpoint **102.** In the preferred embodiment of the invention the rationalization for such a plurality is the need to support multiple Recording Systems **109** that may be recording in heterogeneous, disparate locations or security domains. Different Recording Systems may also be recording different interaction types (e.g. audio, video, messaging, etc.) with different network elements (e.g. session border controllers, soft switches, etc.). That being said, in the preferred embodiment of the current invention, Recording Systems can optionally share Temporary Storage and Temporary Storage Endpoints.

In the preferred embodiment of the invention, the Recording System **109** is also required to provide metadata updates that must contain information about the location, within temporary storage, as exposed by a Temporary Storage Endpoint **101** to the Storage Manager **104.** Those updates would, for example, indicate when an interaction has started (interaction creation) or when an interaction has completed. By that very action, the Storage Manager is made aware of location specific details. There is an assumption of bidirectional connectivity between a Storage Manager and a Temporary Storage Endpoint. That location is presented as a URL, which implies a specific transport and accessibility mechanism over a network, such as the Internet.

During the process of Transference, the Temporary Storage Endpoint **101** sends updates about the Transference process to the Storage Manager **104.** That further provides an indication to the Storage Manager of when a Transference process has begun, completed, or failed. If the process of Transference fails, Temporary Storage Endpoints may, in the preferred embodiment of the invention, choose to Quarantine those recorded interactions. The storage medium for Quarantine may not be the same as temporary storage.

The second component is the Storage Manager **104.** The Storage Manager catalogs a list of interactions recorded, which is stored in the Subscriber Database **106.** Those interaction records contain metadata about the interaction recorded. For example, in the preferred embodiment of the present, an interaction could be a telephony interaction, where metadata would include the calling and called telephone numbers, as well as the duration of the captured interaction.

Minimally, however, an interaction record should contain the location of a captured interaction, either in progress or immediately after completion of the interaction, and should be accessible via a Temporary Storage Endpoint or for long-term storage and archival be available on a Permanent Storage Endpoint. The Storage Manager is responsible for consistently maintaining the location of a recorded interaction.

In the preferred embodiment of the current invention, the Subscriber Database **106** also maintains a mapping between subscribers of the recording system and Permanent Storage Endpoints **107.** That is done to ensure that in a multiple subscriber, multiple tenant system, storage can be isolated between different subscribers and tenants for security. That flexible policy management ensures that interaction record storage for a particular subscriber can be highly customized.

Those recorded interactions are then available, regardless of their location within a Temporary Storage Endpoint **101** or a Permanent Storage Endpoint **107** to be accessible by a user wishing to manipulate them through the Presentation Portal **105.** The Presentation Portal authenticates a subscriber and based upon a requested retrieval, manipulation, or summarization of an interaction recording, requests the recorded interaction from Temporary Storage Endpoint **101** or Permanent Storage Endpoint **107.** The Presentation Portal proxies the interaction recording stored to the subscriber. Another alternative, which provides end-to-end optimization, is to also redirect the request directly to the HTTP service of either Permanent Storage Endpoints or Temporary Storage Endpoints.

In the preferred embodiment of the current invention the Presentation Portal **105** is exposed as a web-accessible, human accessible service over the Internet. It also provides application-programming interfaces (APIs) for machine accessibility and automatic archival and analytical functions.

Permanent Storage Endpoints **107** provide a HTTP REST interface to the permanent storage of a recorded interaction. In the preferred embodiment of the current invention, Permanent Storage Endpoints leverage the facilities of the file system to provide a catalog of available interactions stored at a particular Permanent Storage facility **109.** As discussed, a Storage Manager manages a plurality of Permanent Storage Endpoints, which is indicated by the second Permanent Storage Endpoint illustrated **108.**

A Permanent Storage Endpoint **107** registers itself with a Storage Manager through a validation process referred to as Registration. Registration enables a Storage Manager to be presented as an available location to store recorded interactions.

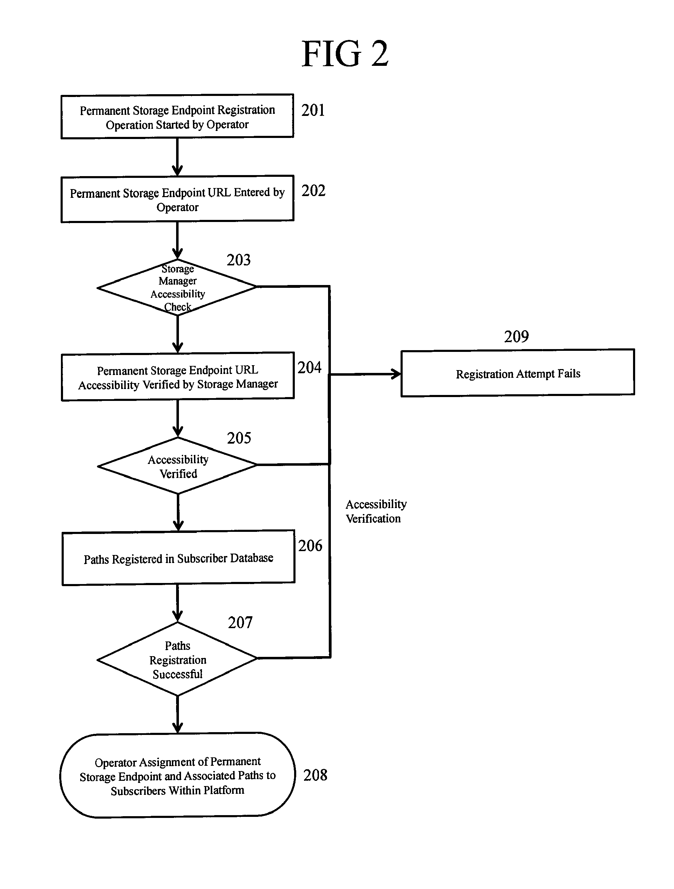

Referring to FIG. **2****,** the process of Registration is started by an operator of the storage system **201.** An operator defined URL is defined and entered into the Registration process **202.** That URL is pre-determined to be network accessible from the Storage Manager. The Registration process then ensures that it can successfully access the Storage Manager **203.** In the preferred embodiment of the current invention, that is accomplished by executing a REST method on the Storage Manager.

The Storage Manager then in turn ensures reverse accessibility by executing a similar REST method on the presented URL representing a Permanent Storage Endpoint **204.** Accessibility is therefore verified **205.** A series of Paths, which represent physical Permanent Storage mounts, are then passed to the Storage Manager **206.** If those steps succeed, the Permanent Storage Endpoint and corresponding Paths are now available for utilization **207.** The operator can then therefore manually or automatically assign the resources identified by a Permanent Storage Endpoint to subscribers or tenants **208.** That mapping is stored in the Subscriber Database. If those validation steps fail, the process is discontinued **209.**

Those Paths, in the preferred embodiment of the current invention, can be mapped to individual subscribers or tenants within the Subscriber Database. If that entire validation process succeeds, a path, and its corresponding Permanent Storage Endpoint are now accessible to store interaction recordings. In the preferred embodiment of the current invention, in order to deregister a Permanent Storage Endpoint, no recorded interactions locations, stored in the Subscriber Database, can refer to the Permanent Storage Endpoint being deregistered.

Referring back to FIG. **1** in the preferred embodiment of the current invention, Permanent Storage Endpoints **107** also provide distributed services. Those distributed services are best located due to their perceived and potential network proximity to Permanent Storage **109.** In the preferred embodiment, those distributed services, include, but are not limited to, the encryption of recorded interactions, the ability to provide speech, text, or image analytics on a recorded interaction, and finally archival services (for example the ability to provide simple file transfer services (FTP)). By providing such distributed services closest to Permanent Storage **109,** network utilization is optimized and end-to-end principality can be preserved, since summarized results are returned to the storage agnostic Presentation Portal.

A plurality of Permanent Storage Endpoints can be applied in the present system. That is due to the fact that those functional components may have to be tailored to accommodate a varying degree of subscriber requirements, such as the ability to store recorded interactions within varying security domains, network locations, or Internet facilities.

While a preferred embodiment has been set forth in detail above, those skilled in the art will readily appreciate that other embodiments can be realized within the scope of the invention. For example, the order in which steps are carried out is illustrative rather than limiting, insofar as it is technically possible to vary that order. Moreover, many of the underlying technologies, proprietary and standards-based, can be replaced with optimal technology approaches more suitable for the custom deployment and operation of an apparatus. Therefore, the present invention should be construed as limited only by the appended claims.

## Claims

1. A method for distributed storage and retrieval of recorded interactions, the method comprising:
(a) registering a plurality of temporary storage endpoints and a plurality of permanent storage endpoints with a storage manager;
(b) capturing one of the interactions in one of the temporary storage endpoints;
(c) determining, in the storage manager, one of the plurality of permanent storage endpoints to which the interaction captured in step (b) should be transferred;
(d) transferring the interaction captured in step (b) to the one of the plurality of permanent storage endpoints determined in step (c); and
(e) maintaining a location of the transferred interaction and making the transferred interaction available for retrieval.

2. The method of claim 1, wherein the interactions comprise telephone interactions.

3. The method of claim 1, wherein step (b) comprises capturing metadata concerning said one of the interactions, and wherein step (e) comprises maintaining the metadata in a subscriber database.

4. The method of claim 3, wherein the metadata comprise at least one of a calling telephone number, a called telephone number, and a call duration.

5. The method of claim 1, wherein step (e) further comprises performing an analysis on said transferred interaction, wherein the analysis comprises at least one of speech analytics, textual analytics, video or picture analytics, and summarized reporting.

6. The method of claim 1, further comprising performing maintenance on the transferred interaction, wherein the maintenance comprises one of deletion and offloading to long-term archival.

7. The method of claim 1, wherein step (a) comprises registering a plurality of uniform resource locators that identify the temporary storage endpoints and the permanent storage endpoints.

8. A system for distributed storage and retrieval of recorded interactions, the system comprising:
a plurality of temporary storage units, each of the plurality of temporary storage units being identified by a temporary storage endpoint, and being configured to capture one of the interactions;
a plurality of permanent storage units, each of the plurality of permanent storage units being identified by a permanent storage endpoint; and
a storage manager, in communication with the plurality of temporary storage units and the plurality of permanent storage units, for registering the plurality of temporary storage endpoints and a plurality of permanent storage endpoints, determining one of the plurality of permanent storage endpoints to which one of the interactions captured by one of the temporary storage units should be transferred, transferring the captured interaction to the determined one of the plurality of permanent storage endpoints, and maintaining a location of the transferred interaction and making the transferred interaction available for retrieval.

9. The system of claim 8, wherein the plurality of temporary storage units are configured such that the interactions comprise telephone interactions.

10. The system of claim 8, wherein the plurality of temporary storage units are configured to capture metadata concerning said one of the interactions, and wherein the storage manager is configured for maintaining the metadata in a subscriber database.

11. The system of claim 10, wherein the metadata comprise at least one of a calling telephone number, a called telephone number, and a call duration.

12. The system of claim 8, wherein the storage manager is configured for performing an analysis of the transferred interaction, wherein the analysis comprises at least one of speech analytics, textual analytics, video or picture analytics, and summarized reporting.

13. The system of claim 8, wherein the storage manager is further configured for performing maintenance on the transferred interaction, wherein the maintenance comprises one of deletion and offloading to long-term archival.

14. The system of claim 8, wherein the storage manager is configured to register the temporary storage endpoints and the permanent storage endpoints by registering a plurality of uniform resource locators that identify the temporary storage endpoints and the permanent storage endpoints.
